(19) **Europäisches Patentamt / European Patent Office / Office européen des brevets**

(11) **EP 2 172 259 A1**

(12) **EUROPEAN PATENT APPLICATION**
published in accordance with Art. 153(4) EPC

(43) Date of publication:
**07.04.2010 Bulletin 2010/14**

(21) Application number: **08790671.5**

(22) Date of filing: **27.06.2008**

(51) Int Cl.:
**B01D 71/38** (2006.01)  **B01D 67/00** (2006.01)
**B01D 69/12** (2006.01)  **B01D 71/56** (2006.01)

(86) International application number:
**PCT/JP2008/061706**

(87) International publication number:
**WO 2009/001916 (31.12.2008 Gazette 2009/01)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **28.06.2007 JP 2007170800**

(71) Applicant: **Nitto Denko Corporation**
**Ibaraki-shi,**
**Osaka 567-8680 (JP)**

(72) Inventors:
• **KONISHI, Takahisa**
**Ibaraki-shi**
**Osaka 567-8680 (JP)**
• **KURATA, Naoki**
**Ibaraki-shi**
**Osaka 567-8680 (JP)**

• **MARUYAMA, Kouji**
**Ibaraki-shi**
**Osaka 567-8680 (JP)**
• **UDA, Yasuhiro**
**Ibaraki-shi**
**Osaka 567-8680 (JP)**
• **YAMASHIRO, Yuuji**
**Ibaraki-shi**
**Osaka 567-8680 (JP)**
• **HARADA, Chiaki**
**Ibaraki-shi**
**Osaka 567-8680 (JP)**

(74) Representative: **Setna, Rohan P.**
**Boult Wade Tennant**
**Verulam Gardens**
**70 Gray's Inn Road**
**London WC1X 8BT (GB)**

(54) **COMPOSITE SEMIPERMEABLE MEMBRANES AND PROCESS FOR PRODUCTION THEREOF**

(57) It is an object of the present invention to provide a process for producing, easily and at a low cost, a composite semipermeable membrane having excellent contamination resistance, especially microbial contamination resistance, and a composite semipermeable membrane produced by the process.
The process for producing a composite semipermeable membrane of the present invention comprises forming a skin layer including a polyamide resin obtained by a reaction between a polyfunctional amine component and a polyfunctional acid halide component on the surface of a porous support; forming a polymer layer (A) including a silver salt compound on the skin layer directly or through other layers; and reducing the silver salt compound to precipitate metal silver in the polymer layer (A) and/or on the surface thereof.

EP 2 172 259 A1

**EP 2 172 259 A1**

**Description**

FIELD OF THE INVENTION

The present invention relates to a composite semipermeable membrane having a skin layer which includes a polyamide resin and a porous support that supports the skin layer, and to a process for producing the composite semipermeable membrane. The composite semipermeable membranes are suitably used for production of ultrapure water, desalination of brackish water or sea water, etc., and usable for removing or collecting pollution sources or effective substances from pollution, which causes environment pollution occurrence, such as dyeing drainage and electrodeposition paint drainage, leading to contribute to closed system for drainage. Furthermore, the membrane can be used for concentration of active ingredients in foodstuffs usage, for an advanced water treatment, such as removal of harmful component in water purification and sewage usage etc.

BACKGROUND ART

In water treatment steps using composite semipermeable membranes, fouling, that is, phenomena of degradation in water permeability, such as an amount of water permeation and salt-blocking rate may occur with progress of time.
Accordingly, most costs in management costs of water treatment facilities are consumed for loss disposition that is caused by the fouling, and for fouling prevention. For this reason, fundamental preventive measures to such fouling have been demanded.
Causative substances that give the fouling may be classified into inorganic crystalline foulings, organic foulings, particles and colloidal foulings, and microbial foulings, based on the nature thereof. In the case of polyamide composite semipermeable membranes, the microbial fouling is the main causative substance, which is caused by formation of thin bio films that are formed with absorption of microbes, existing in water, to the surface of a separation membrane.
In order to reduce the fouling, methods such as pretreatment of raw water, modification of electrical property on the surface of a separation membrane, improvement of a module step condition, and periodic cleaning have been widely used. In the case of foulings by microbes that are most frequently generated especially in composite semipermeable membranes, it is known that a treatment using disinfectants such as chlorine will significantly decrease the microbial fouling. However, since chlorine generates by-products such as carcinogenic substances, application to a step for producing drinking water as it is may cause many problems.
Most recent investigations on antifouling separation membranes generally focus on modification of the electric charge property of a surface. For example, a method of forming a surface layer containing a cross-linked organic polymer that has a nonionic hydrophilic group on a reverse osmosis composite membrane is proposed (Patent Document 1). A method of carrying out hydrophilic coating on a polyamide thin film using a non water-soluble high polymer obtained by cross linking of an epoxy compound is proposed (Patent Document 2). A reverse osmosis separation membrane having a nano structure is proposed, the membrane having a structure with nano particles $TiO_2$ incorporated on the surface of the separation membrane (Patent Document 3). Furthermore, a method of blending nano particles in a separation active layer, or a method of providing a hydrophilic layer containing nano particles on a separation active layer is proposed (Patent Document 4).
However, the method of Patent Document 1 only modifies the surface into electrically neutral state, and therefore, the surface does not have functions of disinfection or suppression of increase against bacteria, once the bacteria attach to the surface. Accordingly, the surface has a low effect for suppressing degradation of membrane characteristics caused by organism-originated contamination or secondary contamination resulting therefrom.
In the method of Patent Document 2, there is no function for disinfection or suppression of increase against the attached bacteria, and for this reason, an effect to organism-originated contamination is low.
The method of Patent Document 3 uses a nano-sized photo catalyst, however, unless the photo catalyst is irradiated with light, the photo catalyst does not exert function for decomposing organic substances. Therefore, since light does not reach the inside of spiral elements processed for use in actual water treatment steps of reverse osmosis separation membranes, and of pressure-resistant vessels for storing the spiral elements in a water treatment equipment, the catalyst cannot exhibit the catalytic activity. Accordingly, since the catalyst cannot decompose attached materials on the surface of the membrane, an effect against contamination is low.
In the method of Patent Document 4, the separation active layer requires extremely advanced denseness in a molecular level, however, film formation under mixed state of nano particles impairs the denseness of the separation active layer, and significant degradation of membrane performance will be predicted. In addition, dispersing agents etc. are added for suppressing aggregation of nano particles, and the higher concentration of nano particles for maintenance of antibacterial durability causes aggregation easily, leading to difficulty of forming a uniform separation active layer or a hydrophilic layer. Furthermore, the maintenance of dispersion state of nano particles without aggregation requires extremely advanced technique, and therefore the price of the nano particles will be extremely higher, resulting in problems in costs.

Patent Document 1: JP-A No. 11-226367
Patent Document 2: JP-A No. 2004-25102
Patent Document 3: JP-A No. 2003-53163
Patent Document 4: WO 06/098872

DISCLOSURE OF THE INVENTION

PROBLEMS TO BE SOLVED BY THE INVENTION

It is an object of the present invention to provide a process for producing, easily and at a low cost, a composite semipermeable membrane having excellent contamination resistance, especially microbial contamination resistance, and a composite semipermeable membrane produced by the process.

MEANS FOR SOLVING THE PROBLEMS

As a result of wholehearted investigations performed by the present inventors for solving the above-described problems, it has been found out that the object can be achieved with the process for producing a composite semipermeable membrane shown hereinafter, leading to the completion of the present invention.

That is, the process for producing a composite semipermeable membrane of the present invention comprises forming a skin layer including a polyamide resin obtained by a reaction between a polyfunctional amine component and a polyfunctional acid halide component on the surface of a porous support; forming a polymer layer (A) including a silver salt compound on the skin layer directly or through other layers; and reducing the silver salt compound to precipitate metal silver in the polymer layer (A) and/or on the surface thereof.

The process described above can easily form the polymer layer (A) having uniformly dispersed metal silver, without aggregation, having an intense antimicrobial activity and a wide antimicrobial spectrum on the skin layer. Furthermore, since the skin layer does not have the metal silver dispersed therein, degradation of performance of the skin layer may be suppressed, thereby maintaining higher water permeability and salt-blocking rate.

Furthermore, another process for producing a composite semipermeable membrane of the present invention comprises forming a skin layer including a polyamide resin obtained by a reaction between a polyfunctional amine component and a polyfunctional acid halide component on the surface of a porous support; forming a silver salt layer including a silver salt compound on the skin layer directly or through other layers; reducing the silver salt compound to precipitate metal silver, thereby forming a metal silver layer; and forming a polymer layer (B) on the metal silver layer.

The process described above can easily form the metal silver layer having uniformly dispersed metal silver, without aggregation, having an intense antimicrobial activity and a wide antimicrobial spectrum on the skin layer. Furthermore, since the skin layer does not have the metal silver dispersed therein, degradation of performance of the skin layer may be suppressed, thereby maintaining higher water permeability and salt-blocking rate.

In the present invention, the silver salt compound is preferably reduced with active energy rays owing to enabling uniform precipitation of the metal silver and to simplicity.

From the viewpoints of stability in aqueous solutions and solubility in aqueous solutions, the silver salt compound is preferably silver nitrate.

It is necessary that a polymer for forming the polymer layer (A) or (B) does not dissolve the skin layer and the porous support, and that the polymer is not eluted in operation of water treatment, and therefore especially polyvinyl alcohol is preferably used.

The polyvinyl alcohol preferably has a saponification degree of 99 to 100%. Polyvinyl alcohol having a saponification degree of 99 to 100% is soluble in hot water (approximately 80°C), and is water-insoluble at a room temperature (approximately 25°C) due to an influence of hydrogen bonds between molecular chains. Therefore, it preferably exhibits low solubility in aqueous solutions despite low degree of cross linking. Since it can provide many hydroxyl groups to the surface of the polymer layer, it is also preferable from the viewpoint of improvement in hydrophilic property of the composite semipermeable membrane.

Alternatively, water-insolubility of the polymer layer in operation of water treatment may be achieved by cross linking of the polyvinyl alcohol to the polyamide resin of the skin layer, using polyvinyl alcohol having a saponification degree of 90% and over.

The present invention also relates to a composite semipermeable membrane produced by the previously described process. The composite semipermeable membrane of the present invention not only has outstanding microbial contamination resistance, but also has outstanding water permeability and salt-blocking rate.

BEST MODE FOR CARRYING OUT THE INVENTION

Hereinafter, the embodiments of the present invention will be described. The process for producing a composite semipermeable membrane of the present invention comprises forming a skin layer including a polyamide resin obtained by a reaction between a polyfunctional amine component and a polyfunctional acid halide component on the surface of a porous support; forming a polymer layer (A) including a silver salt compound on the skin layer directly or through other layers; and reducing the silver salt compound to precipitate metal silver in the polymer layer (A) and/or on the surface thereof.

Another process for producing a composite semipermeable membrane of the present invention comprises forming a skin layer including a polyamide resin obtained by a reaction between a polyfunctional amine component and a polyfunctional acid halide component on the surface of a porous support; forming a silver salt layer including a silver salt compound on the skin layer directly or through other layers; reducing the silver salt compound to precipitate metal silver, thereby forming a metal silver layer; and forming a polymer layer (B) on the metal silver layer.

The polyfunctional amine component is defined as a polyfunctional amine having two or more reactive amino groups, and includes aromatic, aliphatic, and alicyclic polyfunctional amines.

The aromatic polyfunctional amines include, for example, m-phenylenediamine, p-phenylenediamine, o-phenylenediamine, 1,3,5-triamino benzene, 1,2,4-triamino benzene, 3,5-diaminobenzoic acid, 2,4-diaminotoluene, 2,6-diaminotoluene, N,N'-dimethyl- m-phenylenediamine, 2,4-diaminoanisole, amidol, xylylene diamine etc.

The aliphatic polyfunctional amines include, for example, ethylenediamine, propylenediamine, tris (2-aminoethyl) amine, n-phenylethylenediamine, etc.

The alicyclic polyfunctional amines include, for example, 1,3-diaminocyclohexane,1,2-diaminocyclohexane, 1,4-diaminocyclohexane, piperazine, 2,5-dimethylpiperazine, 4-aminomethyl piperazine, etc.

These polyfunctional amines may be used independently, and two or more kinds may be used in combination. In order to obtain a skin layer having a higher salt-blocking property, it is preferred to use the aromatic polyfunctional amines.

The polyfunctional acid halide component represents polyfunctional acid halides having two or more reactive carbonyl groups.

The polyfunctional acid halides include aromatic, aliphatic, and alicyclic polyfunctional acid halides.

The aromatic polyfunctional acid halides include, for example trimesic acid trichloride, terephthalic acid dichloride, isophthalic acid dichloride, biphenyl dicarboxylic acid dichloride, naphthalene dicarboxylic acid dichloride, benzenetrisulfonic acid trichloride, benzenedisulfonic acid dichloride, chlorosulfonyl benzenedicarboxylic acid dichloride etc.

The aliphatic polyfunctional acid halides include, for example, propanedicarboxylic acid dichloride, butane dicarboxylic acid dichloride, pentanedicarboxylic acid dichloride, propane tricarboxylic acid trichloride, butane tricarboxylic acid trichloride, pentane tricarboxylic acid trichloride, glutaryl halide, adipoyl halide etc.

The alicyclic polyfunctional acid halides include, for example, cyclopropane tricarboxylic acid trichloride, cyclobutanetetracarboxylic acid tetrachloride, cyclopentane tricarboxylic acid trichloride, cyclopentanetetracarboxylic acid tetrachloride, cyclohexanetricarboxylic acid trichloride, tetrahydrofurantetracarboxylic acid tetrachloride, cyclopentanedicarboxylic acid dichloride, cyclobutanedicarboxylic acid dichloride, cyclohexanedicarboxylic acid dichloride, tetrahydrofuran dicarboxylic acid dichloride, etc.

These polyfunctional acid halides may be used independently, and two or more kinds may be used in combination. In order to obtain a skin layer having higher salt-blocking property, it is preferred to use aromatic polyfunctional acid halides. In addition, it is preferred to form a cross linked structure using polyfunctional acid halides having trivalency or more as at least a part of the polyfunctional acid halide components.

Furthermore, in order to improve performance of the skin layer including the polyamide resin, polymers such as polyvinyl alcohol, polyvinylpyrrolidone, and polyacrylic acids etc., and polyhydric alcohols, such as sorbitol and glycerin, may be copolymerized.

The porous support for supporting the skin layer is not especially limited as long as it has a function for supporting the skin layer, and usually ultrafiltration membrane having micro pores with an average pore size approximately 10 to 500 angstroms may preferably be used. Materials for formation of the porous support include various materials, for example, polyarylether sulfones, such as polysulfones and polyether sulfones; polyimides; polyvinylidene fluorides; etc., and polysulfones and polyarylether sulfones are especially preferably used from a viewpoint of chemical, mechanical, and thermal stability. The thickness of this porous support is usually approximately 25 to 125 $\mu$m, and preferably approximately 40 to 75 $\mu$m, but the thickness is not necessarily limited to them. The porous support may be reinforced with backing by cloths, nonwoven fabric, etc.

Processes for forming the skin layer including the polyamide resin on the surface of the porous support is not in particular limited, and any publicly known methods may be used.

For example, the publicly known methods include an interfacial condensation method, a phase separation method, a thin film application method, etc. The interfacial condensation method is a method, wherein an amine aqueous solution containing a polyfunctional amine component, an organic solution containing a polyfunctional acid halide component are forced to contact together to form a skin layer by an interfacial polymerization, and then the obtained skin layer is laid on a porous support, and a method wherein a skin layer of a polyamide resin is directly formed on a porous support by the above-described interfacial polymerization on a porous support. Details, such as conditions of the interfacial condensation method, are described in Japanese Patent Application Laid-Open No. 58-24303, Japanese Patent Application Laid-Open No. 01-180208, and these known methods are suitably employable.

The thickness of the skin layer formed on the porous support is not in particular limited, and it is usually approximately 0.05 to 2 $\mu$m, and preferably 0.1 to 1 $\mu$m.

In the present invention, after forming the skin layer on the surface of the porous support, a polymer membrane including a silver salt compound is formed on the skin layer directly or through other layers.

Examples of the silver salt compound to be used in the present invention include silver halides (silver chloride, silver bromide, silver iodide) ; silver salts of inorganic acids such as silver nitrate and silver sulfate; and silver salts of organic acids such as silver acetate, silver lactate, and silver malonate. Of these silver salts, especially silver nitrate is preferably used.

The polymer for forming the polymer membrane is not particularly limited, as long as it does not dissolve the skin layer and the porous support and does not elute in water treatment operation. Examples of the polymer include polyvinyl alcohols, polyvinyl pyrroles, polyvinyl pyrrolidones, hydroxypropylcelluloses, polyethylene glycols, and saponified polyethylene-vinyl acetate copolymers. Of these examples, polyvinyl alcohols are preferred, and polyvinyl alcohols having a saponification degree of 99 to 100% are especially preferred.

Furthermore, elution of the polyvinyl alcohol in water treatment operation may be prevented by using polyvinyl alcohol having a saponification degree of 90% and over and then by cross linking the polyvinyl alcohol to the polyamide resin of the skin layer. Examples of a method for cross linking polyvinyl alcohol include methods of immersing the polymer layer (A) in a polyvalent aldehyde solution acidified with hydrochloric acid after forming the polymer layer (A) on the skin layer. Examples of the polyvalent aldehyde include dialdehydes such as glutaraldehyde and terephthalaldehyde. Here, organic cross linking agents such as epoxy compounds and polyvalent carboxylic acids, and inorganic cross linking agents such as boron compounds may be used as the cross linking agents.

The polymer membrane is formed by applying an aqueous solution including the silver salt compound and the polymer directly or through other layers (for example, a protective layer containing a hydrophilic resin) onto the skin layer. Examples of application methods include spraying, application, showering and the like. As solvents, organic solvents that do not degrade the performance of the skin layer may be used in combination besides water. Examples of the organic solvents include fatty alcohols such as methanol, ethanol, propanol, and butanol; and lower alcohols such as methoxy methanol and methoxy ethanol.

The concentration of the silver salt compound in the aqueous solution is preferably 0.001 to 10% by weight, and more preferably 0.1 to 1% by weight. The concentration less than 0.001% by weight of the silver salt compound does not allow sufficient exertion of an antibacterial effect due to the excessively small amount of the metal silver in the polymer layer (A), and the concentration exceeding 10% by weight tends to degrade the membrane performance.

The concentration of the polymer in the aqueous solution is preferably 0.01 to 1% by weight, and more preferably 0.05 to 0.5% by weight. The concentration less than 0.01% by weight of the polymer allows easy peeling of the metal silver on the surface of the polymer layer (A), and makes sufficient cover of the skin layer or the like impossible. On the other hand, the concentration exceeding 1% by weight gives an excessive thickness to the polymer layer (A), and tends to degrade the water permeability.

The temperature of the aqueous solution is not particularly limited as long as it is in a temperature range at which the aqueous solution exists as a liquid, and the temperature is preferably 10 to 90°C, more preferably 10 to 60°C, and especially preferably 10 to 45°C, in view of preventing the degradation of the skin layer, and easiness of handling, etc.

Subsequently, the polymer membrane is dried to form a polymer layer (A). A temperature in drying treatment is not particularly limited, and the temperature is preferably 20 to 150°C, and more preferably 40 to 130°C. The temperature less than 20°C may excessively elongate the drying treatment, or may cause insufficient drying. On the other hand, the temperature more than 150°C may cause structural change of the membrane by heat, thereby showing a tendency of degrading the membrane performance.

The thickness of the polymer layer (A) is not particularly limited, and it is usually 0.01 to 1 $\mu$m, and preferably 0.01 to 0.1$\mu$m. The thickness less than 0.01 $\mu$m of the polymer layer (A) does not allow sufficient exertion of an antibacterial effect, and the thickness more than 1 $\mu$m shows a tendency of lowering the water permeability.

Subsequently, metal silver is precipitated in the polymer layer (A) and/or on the surface thereof by reducing the silver salt compound. A method of reducing the silver salt compound is not particularly limited, and examples thereof include a method of irradiating active energy rays, a method of heating, and a method of treating with reducing agents. Of these methods, the methods of irradiating active energy rays is preferably used since the method can give uniform precipitation of the metal silver in the polymer layer (A) and/or on the surface thereof.

Examples of the active energy rays include ultraviolet rays (UV-A, UV-B, UV-C) emitted from radiation sources such as xenon lamps, low-pressure mercury lamps, high-pressure mercury lamps and extra high-pressure mercury lamps; visible lights; electron rays emitted from electron beam accelerators at approximately 20 to 2000 kV; and radioactive rays such as $\alpha$-rays, $\beta$-rays, and $\gamma$-rays. In consideration of handling and workability, ultraviolet rays or visible lights are preferably used.

When using ultraviolet rays and/or visible lights as the active energy rays, the amount of the ultraviolet rays and/or visible lights irradiation is suitably adjusted based on the amount of the silver salt compound included in the polymer layer (A), and it is usually approximately 10 to 2000 mJ/cm$^2$.

The size of the metal silver that is precipitated by reducing the silver salt compound is not particularly limited, and it is preferably in nano-scale. In the case of nano metal silver, the size thereof is approximately 1 to 100 nm.

On the other hand, in another embodiment of the present invention, a silver salt layer including a silver salt compound is formed directly or through other layers on the skin layer. Then, metal silver is precipitated by reducing the silver salt compound to form a metal silver layer, and subsequently, a polymer layer (B) is formed on the metal silver layer.

As the silver salt compound to be used in the embodiment, a similar silver salt compound as described above may be used.

The silver salt layer is formed by applying an aqueous solution including the silver salt compound directly or through other layers (for example, a protective layer containing a hydrophilic resin) onto the skin layer, and subsequently by drying the layer. The application method, the concentration of the silver salt compound in the aqueous solution, the drying temperature and the like are similar to those described above.

Then, the metal silver is precipitated by reducing the silver salt compound to form the metal silver layer. The method of reducing the silver salt compound is similar to the method described above.

Subsequently, the polymer layer (B) is formed on the metal silver layer. The polymer for forming the polymer layer (B) and the method for forming the polymer layer (B) are similar to those described above. Here, as previously described, the polyvinyl alcohol having a saponification degree of 90% and over may be used, and then the polyvinyl alcohol may be cross linked to the polyamide resin of the skin layer.

The concentration of the polymer in the aqueous solution is preferably 0.01 to 1% by weight, and more preferably 0.05 to 0.5% by weight. Since the concentration less than 0.01% by weight of the polymer cannot provide sufficient cover of the metal silver layer, and therefore peeling of the metal silver may easily occur. Alternatively, the concentration exceeding 1% by weight gives an excessive thickness to the polymer layer (B), and shows a tendency of lowering the water permeability.

The thickness of the polymer layer (B) is not particularly limited, and it is usually 0.01 to 1 $\mu$m and preferably 0.01 to 0.1 $\mu$m. The thickness less than 0.01 $\mu$m of the polymer layer (B) cannot provide sufficient cover of the metal silver layer, and the thickness more than 1 $\mu$m gives excessive thickness to the polymer layer (B), and shows a tendency of lowering the water permeability.

For improvement in salt-blocking property, water permeability, anti-oxidation agent property, etc., of the composite semipermeable membrane, various conventionally publicly known treatments may be applied. EXAMPLE

The present invention will, hereinafter, be described with reference to Examples, but the present invention is not limited at all by these Examples.

Evaluation and measuring method

(Measurement of permeation flux and salt-blocking rate)

A flat film-like ultra-low pressure reverse osmosis composite membrane (with no polymer layer) was cut into a predetermined shape and size, and was set to a cell for flat film evaluation. An aqueous solution containing about 1500 mg/L of NaCl and being adjusted to a pH of 6.5 to 7.5 with NaOH was allowed to contact to a supply side and permeation side of the membrane at a differential pressure of 1.5 Mpa at 25°C. A permeation velocity and electric conductivity of the permeated water obtained by this operation were measured, and a permeation flux (m$^3$/m$^2$·d) and a salt-blocking rate (%) were calculated. The correlation (calibration curve) of the NaCl concentration and electric conductivity of the aqueous solution was made beforehand, and the salt-blocking rate was calculated by the following equation. Then, the permeation flux (m$^3$/m$^2$·d) and salt-blocking rate (%) of the flat film-like composite semipermeable membrane (with polymer layer) produced were also calculated as described above.

```
Salt-blocking rate (%) = {1-(NaCl concentration in permeated

liquid [mg/L])/(NaCl concentration in supply solution) [mg/L]}

× 100
```

(Antibacterial evaluation)

Evaluation was made according to JIS Z 2801:2000.

Example 1

An aqueous solution (isopropanol : water = 3 : 7) containing 0.1% by weight of silver nitrate, and 0.25% by weight of polyvinyl alcohol having a saponification degree of 99% was applied onto a skin layer of an ultra-low pressure reverse osmosis composite membrane (manufactured by NITTO DENKO Corporation; model number: ES20; performance: permeation flux 1.2 ($m^3/m^2{\cdot}d$); salt-blocking rate 99.6 (%)) to form a polymer membrane. Subsequently, it was dried at 130°C for 3 minutes in an oven to form a polymer layer (A) (thickness: 0.1 $\mu$m). Then, the surface of the polymer layer (A) was irradiated with ultraviolet rays of high pressure mercury lamps (UV-A (320 to 390 nm) : 280 mJ/$cm^2$, UV-B (280 to 320 nm) : 200 mJ/$cm^2$, UV-C (250 to 260 nm) : 150 mJ/$cm^2$, UV-V: 70 mJ/$cm^2$) to reduce silver nitrate.
In this way, metal silver was precipitated in the polymer layer (A) and/or on the surface thereof to produce a composite semipermeable membrane. The composite semipermeable membrane produced had a permeation flux of 0.8 ($m^3/m^2{\cdot}d$), and a salt-blocking rate of 99.5 (%). Furthermore, the composite semipermeable membrane produced had an antibacterial effect.

Example 2

An aqueous solution (isopropanol : water = 3 : 7) containing 0.1% by weight of silver nitrate, and 0.25% by weight of polyvinyl alcohol having a saponification degree of 90% was applied onto a skin layer of an ultra-low pressure reverse osmosis composite membrane (manufactured by NITTO DENKO Corporation; model number: ES20; performance: permeation flux 1.2 ($m^3/m^2{\cdot}d$); salt-blocking rate 99.6 (%)) to form a polymer membrane. Subsequently, it was dried at 130°C for 3 minutes in an oven to form a polymer layer (A) (thickness: 0.1 $\mu$m). Then, the surface of the polymer layer (A) was irradiated with ultraviolet rays of high pressure mercury lamps (UV-A (320 to 390 nm) : 280 mJ/$cm^2$, UV-B (280 to 320 nm) : 200 mJ/$cm^2$, UV-C (250 to 260 nm): 150 mJ/$cm^2$, UV-V: 70 mJ/$cm^2$) to reduce silver nitrate.
In this way, metal silver was precipitated in the polymer layer (A) and/or on the surface thereof. Subsequently, the obtained composite membrane was immersed in an aqueous solution containing 0.001% by weight of glutaraldehyde acidified by 0. 24 N of hydrochloric acid for 10 seconds. The composite membrane was dried again at 130°C for 5 minutes to produce a composite semipermeable membrane. The composite semipermeable membrane produced had a permeation flux of 0.78 ($m^3/m^2{\cdot}d$), and a salt-blocking rate of 99.6 (%). Furthermore, the composite semipermeable membrane produced had an antibacterial effect.

Example 3

An aqueous solution (isopropanol : water = 3 : 7) containing 0.1% by weight of silver nitrate was applied onto a skin layer of an ultra-low pressure reverse osmosis composite membrane (manufactured by NITTO DENKO Corporation; model number: ES20; performance: permeation flux 1.2 ($m^3/m^2{\cdot}d$); salt-blocking rate 99.6 (%)). Subsequently, it was dried at 130°C for a minute in an oven to form a silver nitrate layer. Then, the surface of the silver nitrate layer was irradiated with ultraviolet rays of high pressure mercury lamps (UV-A (320 to 390 nm) : 280 mJ/$cm^2$, UV-B (280 to 320 nm) : 200 mJ/$cm^2$, UV-C (250 to 260 nm) : 150 mJ/$cm^2$, UV-V: 70 mJ/$cm^2$) to reduce the silver nitrate. In this way, metal silver was precipitated to form a metal silver layer. Then, an aqueous solution (isopropanol : water =3 : 7) containing 0.25% by weight of polyvinyl alcohol having a saponification degree of 99% was applied onto the metal silver layer to form a polymer membrane. Subsequently, it was dried at 130°C for 3 minutes in an oven to form a polymer layer (B) (thickness: 0.1 $\mu$m). The composite semipermeable membrane produced had a permeation flux of 0.78 ($m^3/m^2{\cdot}d$) and a salt-blocking rate of 98.8 (%). Furthermore, the composite semipermeable membrane produced had an antibacterial effect.

Comparative example 1

An aqueous solution (isopropanol : water =3 : 7) containing 0.25% by weight of polyvinyl alcohol having a saponification degree of 99% was applied onto a skin layer of an ultra-low pressure reverse osmosis composite membrane (manufactured by NITTO DENKO Corporation; model number: ES20; performance: permeation flux 1.2 ($m^3/m^2 \cdot d$); salt-blocking rate 99.6 (%)) to form a polymer membrane. Subsequently, it was dried at 130°C for 3 minutes in an oven to form a polymer layer (thickness: 0.1 $\mu$m), and then a composite semipermeable membrane was produced. The composite semipermeable membrane produced had a permeation flux of 0.8 ($m^3/m^2 \cdot d$) and a salt-blocking rate of 99.5 (%). The composite semipermeable membrane produced did not have an antibacterial effect.

**Claims**

1. A process for producing a composite semipermeable membrane, the process comprising:

   forming a skin layer including a polyamide resin obtained by a reaction between a polyfunctional amine component and a polyfunctional acid halide component on the surface of a porous support;
   forming a polymer layer (A) including a silver salt compound on the skin layer directly or through other layers; and reducing the silver salt compound to precipitate metal silver in the polymer layer (A) and/or on the thereof.

2. A process for producing a composite semipermeable membrane, the process comprising:

   forming a skin layer including a polyamide resin obtained by a reaction between a polyfunctional amine component and a polyfunctional acid halide component on the surface of a porous support;
   forming a silver salt layer including a silver salt compound on the skin layer directly or through other layers;
   reducing the silver salt compound to precipitate metal silver, thereby forming a metal silver layer; and forming a polymer layer (B) on the metal silver layer.

3. The process for producing a composite semipermeable membrane according to claim 1 or 2, wherein the silver salt compound is reduced with active energy rays.

4. The process for producing a composite semipermeable membrane according to claim 1 or 2, wherein the silver salt compound is silver nitrate.

5. The process for producing a composite semipermeable membrane according to claim 1 or 2, wherein a polymer for forming the polymer layer (A) or (B) is a polyvinyl alcohol.

6. The process for producing a composite semipermeable membrane according to claim 5, wherein the polyvinyl alcohol has a saponification degree of 99 to 100%.

7. The process for producing a composite semipermeable membrane according to claim 5, the process comprising:

   cross linking the polyvinyl alcohol to the polyamide resin of the skin layer, wherein the polyvinyl alcohol has a saponification degree of 90% and over.

8. A composite semipermeable membrane produced by the process according to claim 1 or 2.

**INTERNATIONAL SEARCH REPORT**

| | International application No. |
|---|---|
| | PCT/JP2008/061706 |

A.  CLASSIFICATION OF SUBJECT MATTER
*B01D71/38*(2006.01)i, *B01D67/00*(2006.01)i, *B01D69/12*(2006.01)i, *B01D71/56*
(2006.01)i

According to International Patent Classification (IPC) or to both national classification and IPC

B.  FIELDS SEARCHED

Minimum documentation searched (classification system followed by classification symbols)
B01D71/38, B01D67/00, B01D69/12, B01D71/56

Documentation searched other than minimum documentation to the extent that such documents are included in the fields searched
Jitsuyo Shinan Koho        1922-1996   Jitsuyo Shinan Toroku Koho   1996-2008
Kokai Jitsuyo Shinan Koho  1971-2008   Toroku Jitsuyo Shinan Koho   1994-2008

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y<br>A | JP 5-115760 A  (Mitsubishi Rayon Co., Ltd.),<br>14 May, 1993 (14.05.93),<br>Claim 1; Par. Nos. [0008], [0015]<br>(Family: none) | 1,3-8<br>2 |
| Y<br>A | JP 3379963 B2  (Nitto Denko Corp.),<br>24 February, 2003 (24.02.03),<br>Claims 1, 7; page 4, left column, lines 38 to 45; example 1<br>(Family: none) | 1,3-8<br>2 |
| Y<br>A | JP 2001-286741 A  (Toray Industries, Inc.),<br>16 October, 2001 (16.10.01),<br>Claim 1; Par. Nos. [0042], [0045], [0052]; example 1<br>(Family: none) | 1,3-8<br>2 |

[X] Further documents are listed in the continuation of Box C.    [ ] See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
18 July, 2008 (18.07.08)

Date of mailing of the international search report
29 July, 2008 (29.07.08)

Name and mailing address of the ISA/
Japanese Patent Office

Facsimile No.

Authorized officer

Telephone No.

Form PCT/ISA/210 (second sheet) (April 2007)

**INTERNATIONAL SEARCH REPORT**

International application No.

PCT/JP2008/061706

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 2000-26220 A  (Toto Ltd.),<br>25 January, 2000 (25.01.00),<br>Par. Nos. [0002] to [0007], [0014], [0017]<br>(Family: none) | 1,3-8<br>2 |
| Y<br>A | JP 8-81318 A  (Sumitomo Osaka Cement Co., Ltd.),<br>26 March, 1996 (26.03.96),<br>Claim 1; Par. Nos. [0021], [0029]<br>(Family: none) | 1,3-8<br>2 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11226367 A
- JP 2004025102 A
- JP 2003053163 A

- WO 06098872 A
- JP 58024303 A
- JP 1180208 A